# EUROPEAN PATENT SPECIFICATION

(11) **EP 2 610 715 B1**
(45) Date of publication and mention of the grant of the patent: **03.01.2018**
(21) Application number: 11819418.2
(22) Date of filing: 23.08.2011
(51) Int. Cl.: G06F 3/033, G06F 3/02, G06F 3/03

(54) **TRACKBALL-BASED METHOD AND DEVICE FOR PRESS-POSITIONING**
AUF EINER STEUERKUGEL BASIERENDES VERFAHREN UND VORRICHTUNG ZUR PRESSPOSITIONIERUNG
PROCÉDÉ ET DISPOSITIF BASÉS SUR UNE BOULE DE COMMANDE POUR UNE LOCALISATION DE PRESSION

(30) Priority: 23.08.2010 CN 201010261290
(43) Date of publication of application: 03.07.2013
(73) Proprietor: China Mobile Communications Corporation, Beijing 100032 (CN)
(72) Inventor: XUE, Di, Beijing 100032 (CN); ZHU, Xiaoji, Beijing 100032 (CN); QIAN, Haixiang, Beijing 100032 (CN)
(74) Representative: Hertin und Partner Rechts- und Patentanwälte PartG mbB
(86) International application number: PCT/CN2011/078754
(87) International publication number: WO 2012/025043

(56) References cited:
- EP-A1- 0 526 124
- EP-A1- 1 739 531
- WO-A1-2010/067255
- CN-A- 101 131 614
- JP-A- 9 282 083
- JP-A- 2007 304 941
- US-A- 5 784 052
- US-A1- 2004 032 397
- US-A1- 2006 274 042
- US-B1- 6 320 569

## Description

### TECHNICAL FIELD

The present invention relates to the field of smart terminals, in particular to method and device for trackball-based press positioning.

### BACKGROUND

There exists a trackball in a current mobile terminal. A user can perform operation on the trackball, the mobile terminal receives and recognizes the operation, and then positions or selects the information displayed thereon in accordance with the recognition result.

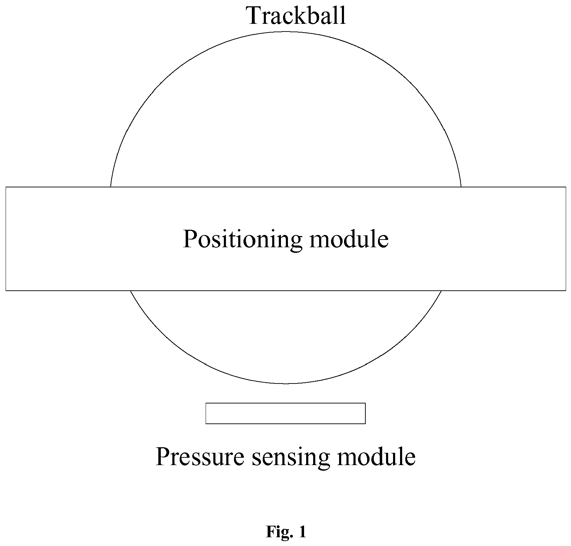

Fig. 1 is a schematic view showing the position of a trackball in a current mobile terminal, where the trackball is connected to a positioning module. When the mobile terminal recognizes that the trackball is being scrolled, it notifies the positioning module to record the trajectory of the trackball. A processing module of the mobile terminal recognizes the trajectory as a positioning operation on the information displayed on a screen. When a pressure sensing module of the mobile terminal senses a pressing operation of the trackball, it transmits the pressing operation to the processing module which recognizes the pressing operation as a point-and-click operation on the information displayed on the screen.

The operations on the trackball that may be recognized by the current mobile terminal merely include a scrolling operation and a pressing operation. The scrolling operation is used to effect a positioning operation on the information displayed on a screen of the mobile terminal, and the pressing operation is used to effect a point-and-click operation on the information displayed on the screen. When the trackball is being pressed and scrolled, it is in contact with the pressure sensing module under the effect of pressure. Due to the friction between the trackball and the pressure sensing module, it is impossible to scroll the trackball under the friction. In addition, when the trackball is being pressed and scrolled, the mobile terminal can merely recognize such operation as a pressing operation or a scrolling operation on the trackball. As a result, the recognition result at the mobile terminal is inaccurate, and the final operation on the information displayed on the screen will not be performed properly.

EP0526124A1 discloses a selection device includes a track ball rotatably mounted on the rollers. US5784052A discloses a track ball enables 3D coordinates into a data processing system. WO2010067255A1 discloses a trackball module for connecting a trackball to an electrical device. EP1739531A1 discloses a ball-based device for controlling the movements of a cursor on a screen. US6320569B1 discloses a miniature track ball pointer device. US20040032397A1 discloses a mouse handled by hand. US20060274042 A1 discloses a mouse with improved mechanisms.

### SUMMARY

The present invention aims to provide method and device for trackball-based press positioning, so as to effect a press-positioning operation on a trackball. The invention is defined by the independent claims.

### BRIEF DESCRIPTION OF THE DRAWINGS

Fig. 1 is a structural schematic view showing the position of a trackball in a mobile terminal according to the prior art;
Fig.2 is a flow chart showing the trackball-based press positioning process according to embodiments of the present invention;
Fig.3 is a structural schematic view showing a multi-legged support, a pressure sensing module, a trackball and a positioning module according to one embodiment of the present invention;
Fig.4 is a schematic view showing the elastic deformation of an elastic support of the multi-legged support according to embodiments of the present invention;
Fig.5 is a flow chart showing the trackball-based press positioning process according to embodiments of the present invention;
Fig.6 is another flow chart showing the trackball-based press positioning process according to embodiments of the present invention;
Fig.7 is another flow chart showing the trackball-based press positioning process according to embodiments of the present invention; and
Fig.8 is a structural schematic view showing a device for trackball-based press positioning according to embodiments of the present invention.

### DETAILED DESCRIPTION

In order to recognize a press positioning operation on a trackball effectively, the present invention provides a method for trackball-based press positioning. According to the method, when the trackball is under pressure, a multi-legged support that supports the trackball is deformed, and then transmits the deformation information to a processing module. The processing module compares the deformation information with deformation threshold information stored therein. When it is determined that the trackball is under pressure but not in contact with a pressure sensing module, a trajectory of the trackball is recorded by a positioning module, and corresponding operations are performed on the displayed information in accordance with the trajectory. The press positioning information of the trackball may be recognized according to the present invention, and corresponding operations may be determined in accordance with the information. As a result, the accuracy of the recognition result at the mobile terminal and the accuracy of the final operation on the information displayed on a screen will be increased.

The present invention is described hereinafter in conjunction with the drawings.

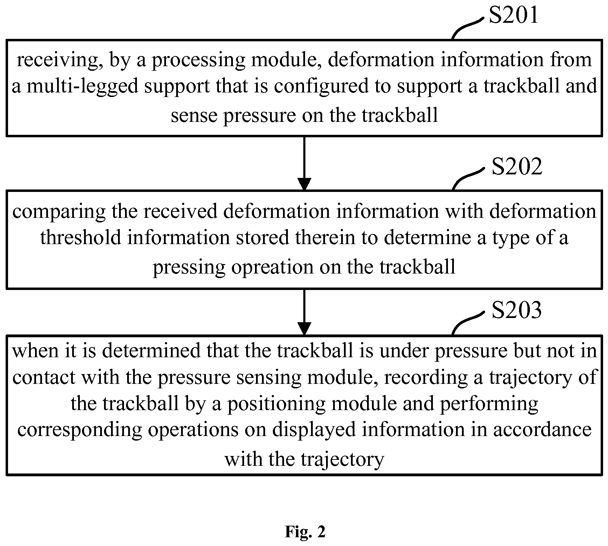

Fig.2 is a flow chart showing the trackball-based press positioning process according to embodiments of the present invention. The process comprises the following steps.

S201: receiving, by a processing module, deformation information from a multi-legged support that is configured to support a trackball and sense pressure on the trackball.

Each leg of the multi-legged support includes an elastic support and a supporting ball that is in contact with the trackball and connected to the elastic support. The elastic support includes two elastic components connected via a shaft. One of the elastic components is connected to the supporting ball and the other is connected to a fixing module of the multi-legged support in a mobile terminal. The fixing module may be, for example, a circuit board of the mobile terminal, or other hardware modules for fixing the multi-legged support. A sensor provided on the other elastic component for sensing the deformation information may be mounted on the elastic component and/or the shaft.

Step 202: comparing the received deformation information with deformation threshold information stored therein to determine a type of a pressing operation on the trackball.

When the trackball in the mobile terminal is under no pressure, the distance between the trackball and the pressure sensing module is determined and the deformation information of the multi-legged support that supports the trackball is determined. When the trackball is under pressure and moves downward, if the trackball moves above the pressure sensing module but not in contact therewith, the deformation information of the multi-legged support may also be determined. As a result, it is able to determine a type of a pressing operation on the trackball in accordance with the deformation information of the multi-legged support.

S203: when it is determined that the trackball is under pressure but not in contact with the pressure sensing module, recording a trajectory of the trackball by a positioning module and performing corresponding operations on the displayed information in accordance with the trajectory.

According to embodiments of the present invention, when the processing module of the mobile terminal recognizes that the trackball is under pressure but not in contact with the pressure sensing module, it may recognize the type of the pressing operation as "light pressing operation". So even if the trackball is pressed, it is also able to perform a scrolling operation on the trackball. In order to accurately recognize the scrolling operation after the pressing operation, the processing module notifies the positioning module to record the trajectory of the trackball, and then determines the positioning operation on the information displayed on a screen in accordance with the trajectory of the trackball recorded in the positioning module.

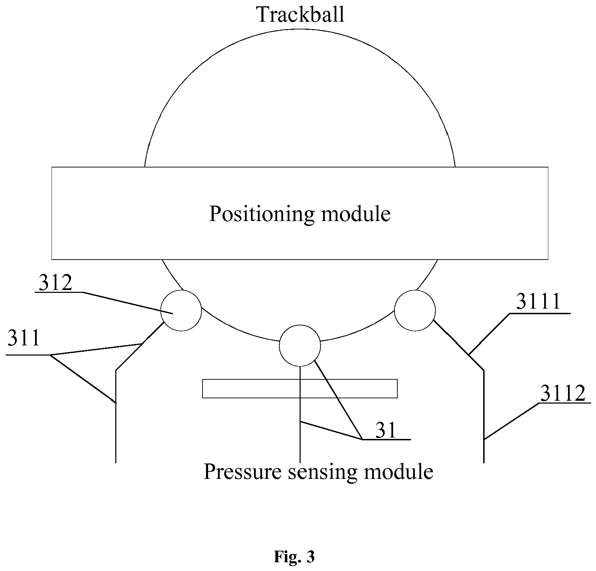

Fig.3 is a structural schematic view showing a multi-legged support, e.g., a three-legged support, a pressure sensing module, a trackball and a positioning module according to one embodiment of the present invention. In Fig.3, the three-legged support 31 supports the trackball and senses pressure on the trackball. Each leg of the three-legged support 31 includes an elastic support 311 and a supporting ball 312, and the elastic support 311 is fixed onto a circuit board of the mobile terminal and between the circuit board and the supporting ball 312. The elastic support 311 includes a first elastic component 3111 and a second elastic component 3112 connected to each other via a shaft. To be specific, the first elastic component 3111 is connected to the shaft and the supporting ball 312, and the second elastic component 3112 is connected to the shaft and fixed onto the circuit board.

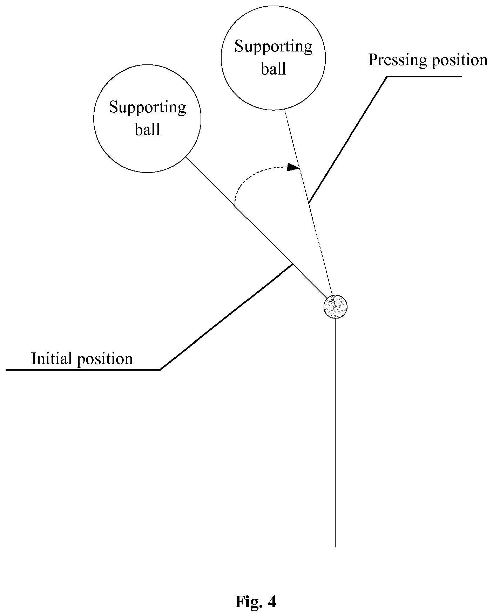

Fig.4 is a shematic view showing the elastic deformation of an elastic support of the multi-legged support according to embodiments of the present invention. In Fig.4, initial position represents the deformation of the elastic support when it is not under pressure, and pressing position represents the deformation of the elastic support when it is under pressure. As shown in Fig.4, the deformation information when the elastic support is under pressure may be determined in accordance with the deformation when the elastic support is under pressure and the deformation when the elastic support is not under pressure. The deformation information may specifically comprise angle change information when the elastic support is under pressure. A sensor may be provided on the shaft that connects the two elastic supports of the multi-legged support. The sensor may be a displacement sensor which senses the displacement in accordance with the laser range finding principle, so as to determine the deformation information of the multi-legged support.

In addition, the multi-legged support includes several elastic supports, each of which is provided with a sensor for sensing the elastic deformation, and the sensor on each elastic support reports the sensed deformation information to the processing module, so the deformation information reported by the elastic supports and received by the processing module may be different from each other. In order to facilitate the calculation and increase the measurement accuracy, the deformation information reported by the elastic supports may be averaged, and an average value of the deformation information reported by the elastic supports may be regarded as the deformation information reported by the multi-legged support. Alternatively, when determining the deformation information reported by the multi-legged support, a sum of the deformation information reported by the elastic supports may also be regarded as the deformation information of the multi-legged support. The method for determining the deformation information may be determined flexibly in accordance with the practical need, as long as the deformation threshold information corresponding to the deformation information of the multi-legged support is stored in the processing module.

The deformation threshold information is stored in the processing module, and the deformation threshold information may include first deformation threshold information which is determined in accordance with the distance between the trackball and the pressure sensing module and the deformation information of the multi-legged support that supports the trackball when the trackball is under pressure but not in contact with the pressure sensing module.

When determining the first deformation threshold information, the distance D1 between the trackball and the pressure sensing module when the trackball is not under pressure is known. When the trackball is under pressure, it moves downward for a distance D2 from the pressure sensing module, and such a distance may ensure that the trackball is not in contact with the pressure sensing module, e.g., 1mm or 0.5mm. After these two distances are obtained, a distance D for which the trackball moves downward under the pressure may be determined when the trackball is under pressure but not in contact with the pressure sensing module. The distance D is a difference between D1 and D2.

When the trackball moves downward for the distance D, the deformation information of the multi-legged support may be determined in accordance with the distance D and the deformation information of the multi-legged support that supports the trackball when the trackball is under pressure. Therefore, the deformation information of the multi-legged support when the trackball moves downward for the distance D may be regarded as the first deformation threshold information, and this first deformation threshold information is stored locally for the subsequent judgment on the type of the pressing operation on the trackball.

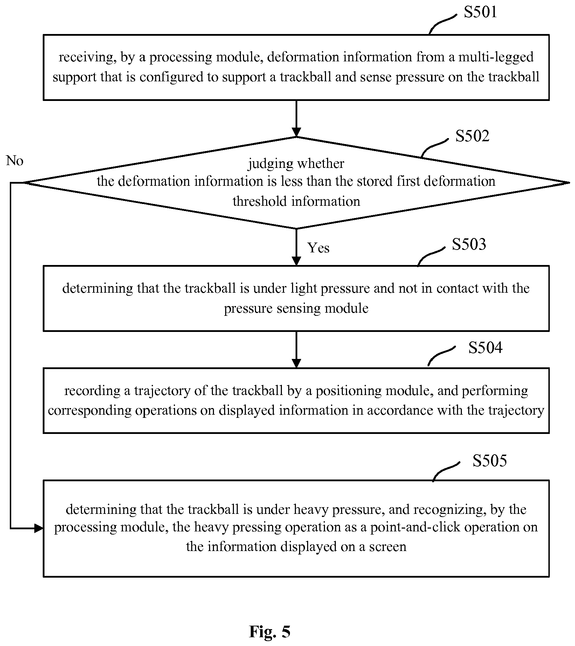

Fig.5 is a flow chart showing the trackball-based press positioning process according to embodiments of the present invention. The process comprises the following steps.

S501: receiving, by a processing module, deformation information from a multi-legged support that is configured to support a trackball and sense pressure on the trackball.

S502: comparing the received deformation information with first deformation threshold information stored therein, judging whether the deformation information is less than the stored first deformation threshold information, if yes, turning to S503, and otherwise turning to S505.

The first deformation threshold information is determined in accordance with the distance between the trackball and the pressure sensing module, and the deformation information of the multi-legged support that supports the trackball when the trackball is under pressure but not in contact with the pressure sensing module.

S503: determining that the trackball is under light pressure and not in contact with the pressure sensing module.

S504: recording a trajectory of the trackball by a positioning module, and performing corresponding operations on the displayed information in accordance with the trajectory.

S505: determining that the trackball is under heavy pressure, and recognizing, by the processing module, the heavy pressing operation as a point-and-click operation on the information displayed on a screen.

According to the above embodiment, the processing module may determine whether the pressure on the trackball is light pressure or heavy pressure in accordance with the deformation information of the multi-legged support and the first deformation threshold information, and perform corresponding operations in accordance with the type of the pressing operation.

The first deformation threshold information is determined in accordance with the distance D2 for which the trackball moves toward the pressure sensing module, and such a distance D2 may be set flexibly in accordance with the practical need. When the distance D2 is smaller, i.e., when the trackball is closer to the pressure sensing module, a first deformation threshold included in the first deformation threshold information determined in accordance with the distance D2 may be bigger. Usually, it may be judged that the trackball is under light pressure when the deformation information of the multi-legged support is smaller than the first deformation threshold, otherwise the trackball is under heavy pressure. Because the first deformation threshold is determined in accordance with the distance D2, when the deformation information of the multi-legged support is equal to the first deformation threshold, the deformation thereof is actually insufficient to enable the trackball to be in contact with the pressure sensing module. In order to ensure the accuracy when the processing module recognizes the type of the pressing operation and increase the accuracy of information indication, the type of the pressing operation may be determined in accordance with the deformation threshold information and whether the pressure sensing module has received a signal indicating that it is pressed by the trackball.

In addition, when the distance D2 is bigger, i.e., when the trackball is farther away from the pressure sensing module, the first deformation threshold included in the first deformation information determined in accordance with the distance D2 may be smaller. When the type of operation is judged in accordance with the first deformation threshold information and the deformation information of the multi-legged support, the pressing operation may be recognized as heavy pressure when the deformation information of the multi-legged support is greater than the stored first deformation threshold information, and actually at this time the trackball is not in contact with the pressure sensing module. In order to ensure the accuracy when the processing module recognizes the type of the pressing operation and increase the accuracy of operation on the information, the type of the pressing operation may be determined in accordance with the deformation threshold information and whether the pressure sensing module has received a signal indicating that it is pressed by the trackball.

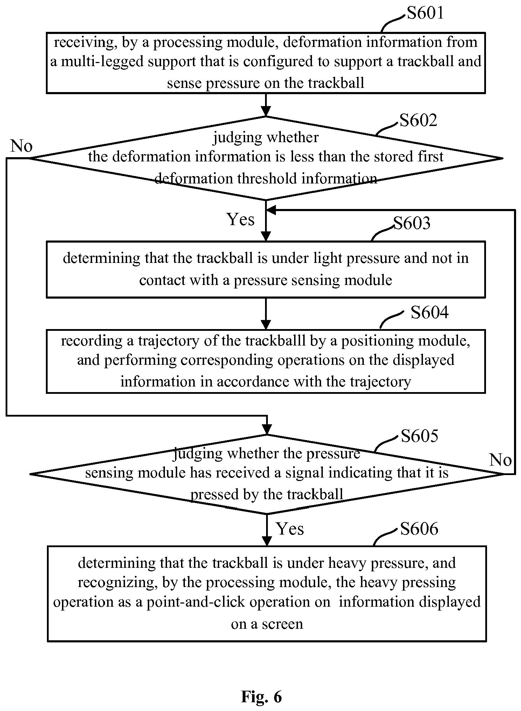

Fig.6 is another flow chart showing the trackball-based press positioning process according to embodiments of the present invention. The process comprises the following steps:
S601: receiving, by a processing module, deformation information from a multi-legged support that is configured to support a trackball and sense pressure on the trackball;
S602: comparing the received deformation information with first deformation threshold information stored therein, judging whether the deformation information is less than the stored first deformation threshold information, if yes, turning to S603 and otherwise turning to S605;
S603: determining that the trackball is under light pressure and not in contact with a pressure sensing module;
S604: recording a trajectory of the trackballl by a positioning module, and performing corresponding operations on the displayed information in accordance with the trajectory;
S605: judging whether the pressure sensing module has received a signal indicating that it is pressed by the trackball, if yes, turning to S606 and otherwise turning to S603; and
S606: determining that the trackball is under heavy pressure, and recognizing, by the processing module, the heavy pressing operation as a point-and-click operation on the information displayed on a screen.

According to the embodiment of the present invention, the type of the pressing operation is judged in accordance with the deformation information of the multi-legged support and whether the pressure sensing module has received a signal indicating that it is pressed by the trackball. As a result, it is able to further ensure the accuracy when the processing module recognizes the type of the pressing operation and increase the accuracy of information indication.

In addition, the multi-legged support is configured to support the trackball and sense the pressure on the trackball, and it is deformed when the trackball is under pressure. The deformation information is determined upon the size of the pressure on the trackball. When the trackball is being scrolled, certain pressure may also be applied onto the trackball. In order to enable the processing module to judge whether the operation on the trackball is a light pressing operation or a scrolling operation, second deformation threshold information may also be stored in the processing module in the embodiment of the present invention. The second deformation threshold information may be determined in accordance with the deformation information of the multi-legged support generated due to the pressure on the trackball when the trackball is being scrolled.

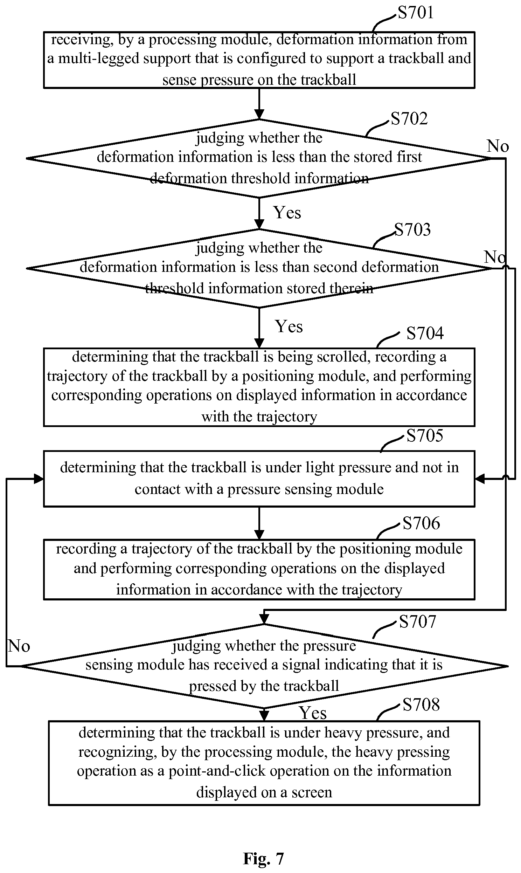

Fig.7 is another flow chart showing the trackball-based press positioning process according to embodiments of the present invention. The process comprises the following steps:
S701: receiving, by a processing module, deformation information from a multi-legged support that is configured to support a trackball and sense pressure on the trackball;
S702: comparing the received deformation information with first deformation threshold information stored therein, judging whether the deformation information is less than the stored first deformation threshold information, if yes, turning to S703 and otherwise turning to S707;
S703: judging whether the deformation information is less than second deformation threshold information stored therein, if yes, turning to S704 and otherwise turning to S705;
S704: determining that the trackball is being scrolled, recording a trajectory of the trackball by a positioning module, and performing corresponding operations on the displayed information in accordance with the trajectory;
S705: determining that the trackball is under light pressure and not in contact with a pressure sensing module;
S706: recording a trajectory of the trackball by the positioning module and performing corresponding operations on the displayed information in accordance with the trajectory;
S707: judging whether the pressure sensing module has received a signal indicating that it is pressed by the trackball, if yes, turning to S708 and otherwise turning to S705; and
S708: determining that the trackball is under heavy pressure, and recognizing, by the processing module, the heavy pressing operation as a point-and-click operation on the information displayed on a screen.

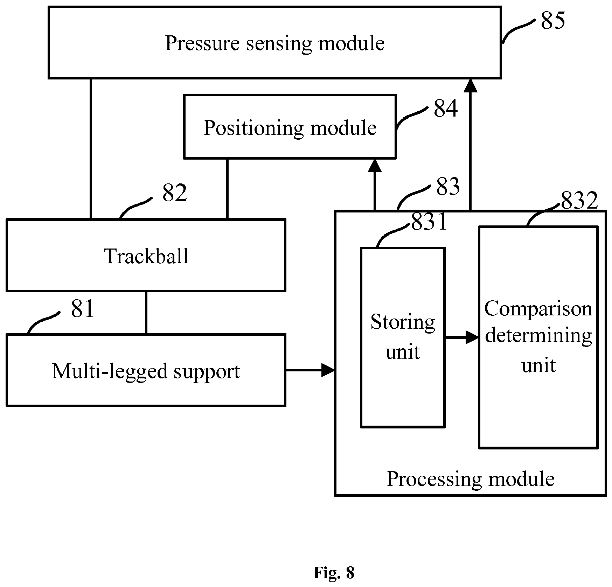

Fig.8 is a structural schematic view showing a device for trackball-based press positioning according to embodiments of the present invention, the device comprising:
a multi-legged support 81, configured to support a trackball and sense pressure on the trackball of a mobile terminal, and transmit its own deformation information under the pressure to a processing module;
a trackball 82, configured to receive the pressure;
a processing module 83, configured to receive the deformation information from the multi-legged support, compare the received deformation information with deformation threshold information stored therein, determine a type of pressing operation on the trackball, and notify a positioning module to determine the operational information when it is determined that the trackball is under pressure but not in contact with a pressure sensing module; and
a positioning module 84, configured to record a trajectory of the trackball and perform corresponding operations on the displayed information in accordance with the trajectory.

The processing module 83 includes:
a storing unit 831, configured to store first deformation threshold information, which is determined in accordance with a distance between the trackball and the pressure sensing module when the trackball is under pressure but not in contact with the pressure sensing module, and the deformation information of the multi-legged support that supports the trackball when the trackball is under pressure but not in contact with the pressure sensing module; and
a comparison determining unit 832 configured to determine that the trackball is under pressure but not in contact with the pressure sensing module when the deformation information is less than the first deformation threshold information.

The processing module 83 is further configured to judge whether the pressure sensing module has received a signal indicating that it is pressed by the trackball when the deformation information is greater than the first deformation threshold information, and determine that the trackball is under pressure but not in contact with the pressure sensing module when it does not receive the signal indicating that it is pressed by the trackball.

The device further comprises a pressure sensing module 85 configured to sense whether pressure is received from the trackball, generate a pressing signal when the pressure from the trackball is sensed, and transmit the pressing signal to the processing module.

The processing module 83 is further configured to perform a point-and-click operation on the displayed information in accordance with the pressing signal when the pressure sensing module receives the pressing signal from the trackball.

The processing module 83 is further configured to compare the deformation information with second deformation threshold information stored therein when the deformation information is less than the first deformation threshold information, determine that the trackball is being scrolled when the deformation information is less than the second deformation threshold information, record the trajectory of the trackball by the positioning module, and perform a positioning operation on the displayed information in accordance with the trajectory.

The multi-legged support 81 includes elastic supports and supporting balls, and each of the elastic supports is provided with a sensor.

The multi-legged support 81 comprises a three-legged support.

The processing module in the embodiments of the present invention may be a Central Processing Unit (CPU), the positioning module may be a sensing element, e.g., a sensor that can recognize scrolling of a trackball, and the pressure sensing module may be a sensing element, e.g., a sensor that can be used for sensing.

According to the method and device for trackball-based press positioning, when the trackball is under pressure, the multi-legged support supporting the trackball will be deformed, and then the multi-legged support transmits the deformation information to the processing module. The processing module compares the deformation information with the deformation threshold information stored therein. When it is determined that the trackball is under pressure but not in contact with the pressure sensing module, the trajectory of the trackball is recorded by the positioning module, and corresponding operations are performed on the displayed information in accordance with the trajectory. The press positioning information of the trackball may be recognized according to the present invention, and corresponding operations may be determined in accordance with the information. As a result, the accuracy of the recognition result at the mobile terminal and the accuracy of the final operation on the information displayed on a screen will be increased.

The above are merely the preferred embodiments of the present invention, but are not used to limit the present invention.

It should be appreciated that, the present invention may be provided as a method, a system or a computer program product, so the present invention may be in the form of full hardware embodiments, full software embodiments, or combinations thereof. In addition, the present invention may be in the form of a computer program product implemented on one or more computer-readable storage mediums (including but not limited to disk memory, CD-ROM and optical memory) having computer-readable program codes.

The present invention is described with reference to the flow charts and/or block diagrams showing the method, device (system) and computer program product according to the embodiments of the present invention. It should be appreciated that each process and/or block, or a combination thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processing implemented by the computer, thereby to provide the steps capable of effecting the functions specified in one or more processes in the flow charts and/or one or more blocks in the block diagrams in accordance with the commands.

Although the preferred embodiments are described above, a person skilled in the art may make modifications and variations to these embodiments in accordance with the basic concept of the present invention. So, the appended claims are intended to include the preferred embodiments and all of the modifications and variations that fall within the scope of the present invention.

## Claims

1. A method for trackball-based press positioning, comprising:
receiving, by a processing module (83), deformation information from a multi-legged support (81) for supporting a trackball (82) and sensing pressure on the trackball (82),
comparing the received deformation information with deformation threshold information stored therein to determine a type of a pressing operation on the trackball (82),
wherein when it is determined that the trackball (82) is under pressure but not in contact with a pressure sensing module (85), recording a trajectory of the trackball (82) by a positioning module (84), and performing corresponding operations on displayed information in accordance with the trajectory;
**characterized in that**,
each leg of the multi-legged support (81) includes an elastic support (311) and a supporting ball (312), the elastic support (311) includes two elastic components (3111, 3112) connected via a shaft, a sensor is provided on the shaft; wherein
the deformation threshold information includes a first deformation threshold information and a second deformation threshold information
the method further comprises:
comparing the deformation information with the second deformation threshold information stored therein when the deformation information is less than the first deformation threshold information; and
when the deformation information is less than the second deformation threshold information, determining that the trackball (82) is being scrolled, recording a trajectory of the trackball (82) by the positioning module (84), and performing a positioning operation on the displayed information in accordance with the trajectory,
wherein determining that the trackball (82) is under pressure but not in contact with the pressure sensing module (85) includes:
comparing the received deformation information with the first deformation threshold information, which is determined in accordance with a distance between the trackball (82) and the pressure sensing module (85) when the trackball (82) is under pressure but not in contact with the pressure sensing module (85) and the deformation information of the multi-legged support (81) that supports the trackball (82) when the trackball (82) is under pressure but not in contact with the pressure sensing module (85); and
determining that the trackball is under pressure but not in contact with the pressure sensing module (85) when the deformation information is less than the first deformation threshold information and greater than the second deformation threshold information.

2. The method according to claim 1, wherein determining that the trackball (82) is under pressure but not in contact with the pressure sensing module (85) further includes:
judging whether the pressure sensing module (85) has received a signal indicating that it is pressed by the trackball (82) when it is judged that the deformation information is greater than the first deformation threshold information; and
determining that the trackball (82) is under pressure but not in contact with the pressure sensing module (85) when the pressure sensing module (85) does not receive the signal indicating that it is pressed by the trackball (82).

3. The method according to claim 2, further comprising:
when the pressure sensing module (85) has received a pressing signal from the trackball (82), performing a point-and-click operation on the displayed information in accordance with the pressing signal.

4. A device for trackball-based press positioning, comprising:
a multi-legged support (81), a trackball (82), a processing module (83) and a positioning module (84), wherein,
the multi-legged support (81), configured to support the trackball (82) and sense pressure on the trackball (82) of a mobile terminal, and transmit its own deformation information under the pressure to the processing module (83),
the trackball (82), configured to receive the pressure;
the processing module (83), configured to:
receive the deformation information from the multi-legged support (81), compare the received deformation information with the deformation threshold information stored therein, determine a type of a pressing operation on the trackball (82)
wherein when it is determined that the trackball (82) is under pressure but not in contact with a pressure sensing module (85), recording a trajectory of the trackball (82) by a positioning module (84), and performing corresponding operations on displayed information in accordance with the trajectory;
**characterized in that**,
each leg of the multi-legged support (81) includes an elastic support (311) and a supporting ball (312), the elastic support (311) includes two elastic components (3111, 3112) connected via a shaft, a sensor is provided on the shaft; wherein the deformation threshold information includes a first deformation threshold information and a second deformation threshold information
the processing module (83) is further configured to:
comparing the deformation information with the second deformation threshold information stored therein when the deformation information is less than the first deformation threshold information; and when the deformation information is less than the second deformation threshold information, determining that the trackball (82) is being scrolled, recording a trajectory of the trackball (82) by the positioning module (84), and performing a positioning operation on the displayed information in accordance with the trajectory,
wherein determining that the trackball (82) is under pressure but not in contact with the pressure sensing module (85) includes:
comparing the received deformation information with the first deformation threshold information, which is determined in accordance with a distance between the trackball (82) and the pressure sensing module (85) when the trackball (82) is under pressure but not in contact with the pressure sensing module (5) and the deformation information of the multi-legged support (1) that supports the trackball (82) when the trackball (82) is under pressure but not in contact with the pressure sensing module (85); and
determining that the trackball is under pressure but not in contact with the pressure sensing module (85) when the deformation information is less than the first deformation threshold information and greater than the second deformation threshold information.

5. The device according to claim 4, wherein the processing module (83) includes:
a storing unit (831), configured to store the first deformation threshold information, which is determined in accordance with a distance between the trackball (82) and the pressure sensing module (85) when the trackball (82) is under pressure but not in contact with the pressure sensing module (85) and the deformation information of the multi-legged support (81) that supports the trackball (82) when the trackball (82) is under pressure but not in contact with the pressure sensing module (85); and
a comparison determining unit (832), configured to determine that the trackball (82) is under pressure but not in contact with the pressure sensing module (85) when the deformation information is less than the first deformation threshold information.

6. The device according to claim 5, wherein
the processing module (83) is further configured to judge whether the pressure sensing module (85) has received a signal indicating that it is pressed by the trackball (82) when the deformation information is greater than the first deformation threshold information, and determine that the trackball (82) is under pressure but not in contact with the pressure sensing module (85) when it does not receive the signal indicating that it is pressed by the trackball (82), and
the device further comprises a pressure sensing module (85) configured to sense whether pressure is received from the trackball (82), generate a pressing signal when the pressure from the trackball (82) is sensed, and transmit the pressing signal to the processing module (83).

7. The device according to claim 6, wherein the processing module (83) is further configured to perform a point-and-click operation on the displayed information in accordance with the pressing signal when the pressure sensing module (85) receives the pressing signal from the trackball (82).

8. The device according to claim 4, wherein the multi-legged support (81) comprises a three-legged support (31).

## Patentansprüche

1. Verfahren für eine auf einer Steuerkugel basierende Presspositionierung, umfassend:
Empfangen, durch ein Verarbeitungsmodul (83), von Deformationsinformationen von einer mehrbeinigen Stütze (81) zum Stützen einer Steuerkugel (82) und Erfassen von Druck auf die Steuerkugel (82),
Vergleichen der empfangenen Deformationsinformationen mit darin gespeicherten Deformationssschwelleninformationen zum Bestimmen einer Art von Pressvorgang auf die Steuerkugel (82),
wobei, wenn bestimmt wird, dass die Steuerkugel (82) unter Druck, aber nicht in Kontakt mit einem Druckerfassungsmodul (85) ist, Aufzeichnen einer Trajektorie der Steuerkugel (82) durch ein Positionierungsmodul (84) und Durchführen von entsprechenden Vorgängen bei angezeigten Informationen in Übereinstimmung mit der Trajektorie;
**dadurch gekennzeichnet, dass**
jedes Bein der mehrbeinigen Stütze (81) eine elastische Stütze (311) und eine Stützkugel (312) beinhaltet, wobei die elastische Stütze (311) zwei elastische Komponenten (3111, 3112) beinhaltet, die über eine Welle verbunden sind, wobei ein Sensor an der Welle bereitgestellt ist; wobei die Deformationsschwelleninformationen erste Deformationsschwelleninformationen und zweite Deformationsschwelleninformationen beinhalten,
wobei das Verfahren ferner Folgendes umfasst:
Vergleichen der Deformationsinformationen mit den darin gespeicherten zweiten Deformationsschwelleninformationen, wenn die Deformationsinformationen weniger als die ersten Deformationsschwelleninformationen betragen; und
wenn die Deformationsinformationen weniger als die zweiten Deformationsschwelleninformationen betragen, Bestimmen, dass die Steuerkugel (82) gerollt wird, Aufzeichnen einer Trajektorie der Steuerkugel (82) durch das Positionierungsmodul (84) und Durchführen eines Positionierungsvorgangs bei den angezeigten Informationen in Übereinstimmung mit der Trajektorie,
wobei das Bestimmen, dass die Steuerkugel (82) unter Druck, aber nicht in Kontakt mit dem Druckerfassungsmodul (85) ist, Folgendes beinhaltet:
Vergleichen der empfangenen Deformationsinformationen mit den ersten Deformationsschwelleninformationen, die in Übereinstimmung mit einem Abstand zwischen der Steuerkugel (82) und dem Druckerfassungsmodul (85) bestimmt werden, wenn die Steuerkugel (82) unter Druck, aber nicht in Kontakt mit dem Druckerfassungsmodul (85) ist, und den Deformationsinformationen der mehrbeinigen Stütze (81), welche die Steuerkugel (82) stützt, wenn die Steuerkugel (82) unter Druck, aber nicht in Kontakt mit dem Druckerfassungsmodul (85) ist; und
Bestimmen, dass die Steuerkugel unter Druck, aber nicht in Kontakt mit dem Druckerfassungsmodul (85) ist, wenn die Deformationsinformationen weniger als die ersten Deformationsschwelleninformationen und mehr als die zweiten Deformationsschwelleninformationen betragen.

2. Verfahren nach Anspruch 1, wobei das Bestimmen, dass die Steuerkugel (82) unter Druck, aber nicht in Kontakt mit dem Druckerfassungsmodul (85) ist, ferner Folgendes beinhaltet:
Beurteilen, ob das Druckerfassungsmodul (85) ein Signal empfangen hat, das darauf hinweist, dass es von der Steuerkugel (82) gepresst wird, wenn beurteilt wird, dass die Deformationsinformationen mehr als die ersten Deformationsschwelleninformationen betragen; und
Bestimmen, dass die Steuerkugel (82) unter Druck, aber nicht in Kontakt mit dem Druckerfassungsmodul (85) ist, wenn das Druckerfassungsmodul (85) nicht das Signal empfängt, das darauf hinweist, dass es von der Steuerkugel (82) gepresst wird.

3. Verfahren nach Anspruch 2, ferner umfassend:
wenn das Druckerfassungsmodul (85) ein Presssignal von der Steuerkugel (82) empfangen hat, Durchführen eines Point-and-Click-Vorgangs in Bezug auf die angezeigten Informationen in Übereinstimmung mit dem Presssignal.

4. Vorrichtung für auf einer Steuerkugel basierende Presspositionierung, umfassend:
eine mehrbeinige Stütze (81), eine Steuerkugel (82), ein Verarbeitungsmodul (83) und ein Positionierungsmodul (84), wobei die mehrbeinige Stütze (81) ausgelegt ist, um die Steuerkugel (82) zu stützen und Druck auf die Steuerkugel (82) eines mobilen Endgeräts zu erfassen und ihre eigenen Deformationsinformationen unter dem Druck an das Verarbeitungsmodul (83) zu übertragen, die Steuerkugel (82) ausgelegt ist, um den Druck zu empfangen; das Verarbeitungsmodul (83) für Folgendes ausgelegt ist:
Empfangen der Deformationsinformationen von der mehrbeinigen Stütze (81), Vergleichen der empfangenen Deformationsinformationen mit den darin gespeicherten Deformationsschwelleninformationen, Bestimmen einer Art eines Pressvorgangs auf die Steuerkugel (82), wobei, wenn bestimmt wird, dass die Steuerkugel (82) unter Druck, aber nicht in Kontakt mit einem Druckerfassungsmodul (85) ist, Aufzeichnen einer Trajektorie der Steuerkugel (82) durch ein Positionierungsmodul (84) und Durchführen von entsprechenden Vorgängen bei angezeigten Informationen in Übereinstimmung mit der Trajektorie;
**dadurch gekennzeichnet, dass**
jedes Bein der mehrbeinigen Stütze (81) eine elastische Stütze (311) und eine Stützkugel (312) beinhaltet, wobei die elastische Stütze (311) zwei elastische Komponenten (3111, 3112) beinhaltet, die über eine Welle verbunden sind, wobei ein Sensor an der Welle bereitgestellt ist; wobei die Deformationsschwelleninformationen erste Deformationsschwelleninformationen und zweite Deformationsschwelleninformationen beinhalten,
wobei das Verarbeitungsmodul (83) ferner für Folgendes ausgelegt ist:
Vergleichen der Deformationsinformationen mit den darin gespeicherten zweiten Deformationsschwelleninformationen, wenn die Deformationsinformationen weniger als die ersten Deformationsschwelleninformationen betragen; und wenn die Deformationsinformationen weniger als die zweiten Deformationsschwelleninformationen betragen, Bestimmen, dass die Steuerkugel (82) gerollt wird, Aufzeichnen einer Trajektorie der Steuerkugel (82) durch das Positionierungsmodul (84) und Durchführen eines Positionierungsvorgangs bei den angezeigten Informationen in Übereinstimmung mit der Trajektorie,
wobei das Bestimmen, dass die Steuerkugel (82) unter Druck, aber nicht in Kontakt mit dem Druckerfassungsmodul (85) ist, Folgendes beinhaltet:
Vergleichen der empfangenen Deformationsinformationen mit den ersten Deformationsschwelleninformationen, die in Übereinstimmung mit einem Abstand zwischen der Steuerkugel (82) und dem Druckerfassungsmodul (85) bestimmt werden, wenn die Steuerkugel (82) unter Druck, aber nicht in Kontakt mit dem Druckerfassungsmodul (5) ist, und den Deformationsinformationen der mehrbeinigen Stütze (1), welche die Steuerkugel (82) stützt, wenn die Steuerkugel (82) unter Druck, aber nicht in Kontakt mit dem Druckerfassungsmodul (85) ist; und
Bestimmen, dass die Steuerkugel unter Druck, aber nicht in Kontakt mit dem Druckerfassungsmodul (85) ist, wenn die Deformationsinformationen weniger als die ersten Deformationsschwelleninformationen und mehr als die zweiten Deformationsschwelleninformationen betragen.

5. Vorrichtung nach Anspruch 4, wobei das Verarbeitungsmodul (83) Folgendes beinhaltet:
eine Speichereinheit (831), die ausgelegt ist, um die ersten Deformationsschwelleninformationen zu speichern, die in Übereinstimmung mit einem Abstand zwischen der Steuerkugel (82) und dem Druckerfassungsmodul (85) bestimmt werden, wenn die Steuerkugel (82) unter Druck, aber nicht in Kontakt mit dem Druckerfassungsmodul (85) ist, und die Deformationsinformationen der mehrbeinigen Stütze (81), welche die Steuerkugel (82) stützt, wenn die Steuerkugel (82) unter Druck, aber nicht in Kontakt mit dem Druckerfassungsmodul (85) ist; und
eine Vergleichsbestimmungseinheit (832), die ausgelegt ist, um zu bestimmen, dass die Steuerkugel (82) unter Druck, aber nicht in Kontakt mit dem Druckerfassungsmodul (85) ist, wenn die Deformationsinformationen weniger als die ersten Deformationsschwelleninformationen betragen.

6. Vorrichtung nach Anspruch 5, wobei
das Verarbeitungsmodul (83) ferner ausgelegt ist, um zu beurteilen, ob das Druckerfassungsmodul (85) ein Signal empfangen hat, das darauf hinweist, dass es von der Steuerkugel (82) gepresst wird, wenn die Deformationsinformationen mehr als die ersten Deformationsschwelleninformationen sind, und Bestimmen, dass die Steuerkugel (82) unter Druck, aber nicht in Kontakt mit dem Druckerfassungsmodul (85) ist, wenn es nicht das Signal empfängt, das darauf hinweist, dass es von der Steuerkugel (82) gepresst wird, und
die Vorrichtung ferner ein Druckerfassungsmodul (85) umfasst, das ausgelegt ist, um zu erfassen, ob Druck von der Steuerkugel (82) empfangen wird, ein Presssignal zu erzeugen, wenn der Druck von der Steuerkugel (82) erfasst wird, und das Presssignal an das Verarbeitungsmodul (83) zu übertragen.

7. Vorrichtung nach Anspruch 6, wobei das Verarbeitungsmodul (83) ferner ausgelegt ist, um einen Point-and-Click-Vorgang bei den angezeigten Informationen in Übereinstimmung mit dem Presssignal durchzuführen, wenn das Druckerfassungsmodul (85) das Presssignal von der Steuerkugel (82) empfängt.

8. Vorrichtung nach Anspruch 4, wobei die mehrbeinige Stütze (81) eine dreibeinige Stütze (31) umfasst.

## Revendications

1. Procédé pour une localisation de pression basée sur une boule de commande, comprenant :
la réception, par un module de traitement (83), d'informations de déformation à partir d'un support à pattes multiples (81) pour supporter une boule de commande (82) et détecter une pression sur la boule de commande (82),
la comparaison des informations de déformation reçues avec des informations de seuil de déformation stockées à l'intérieur pour déterminer un type d'une opération de pression sur la boule de commande (82),
dans lequel, quand il est déterminé que la boule de commande (82) est sous pression mais pas en contact avec un module de détection de pression (85), l'enregistrement d'une trajectoire de la boule de commande (82) par un module de localisation (84), et l'exécution d'opérations correspondantes sur des informations affichées en fonction de la trajectoire ;
**caractérisé en ce que**
chaque patte du support à pattes multiples (81) comprend un support élastique (311) et une boule de support (312), le support élastique (311) comprend deux composants élastiques (3111, 3112) connectés par l'intermédiaire d'un arbre, un capteur est disposé sur l'arbre ; dans lequel
les informations de seuil de déformation comprennent une première information de seuil de déformation et une deuxième information de seuil de déformation
le procédé comprend en outre :
la comparaison des informations de déformation avec la deuxième information de seuil de déformation stockée à l'intérieur quand les informations de déformation sont inférieures à la première information de seuil de déformation ; et
quand les informations de déformation sont inférieures à la deuxième information de seuil de déformation, la détermination du fait que la boule de commande (82) est déroulée, l'enregistrement d'une trajectoire de la boule de commande (82) par le module de localisation (84), et l'exécution d'une opération de localisation sur les informations affichées en fonction de la trajectoire,
dans lequel la détermination du fait que la boule de commande (82) est sous pression mais pas en contact avec le module de détection de pression (85) comprend :
la comparaison des informations de déformation reçues avec la première information de seuil de déformation, qui est déterminée en fonction d'une distance entre la boule de commande (82) et le module de détection de pression (85) quand la boule de commande (82) est sous pression mais pas en contact avec le module de détection de pression (85) et les informations de déformation du support à pattes multiples (81) qui supporte la boule de commande (82) quand la boule de commande (82) est sous pression mais pas en contact avec le module de détection de pression (85) ; et
la détermination du fait que la boule de commande est sous pression mais pas en contact avec le module de détection de pression (85) quand les informations de déformation sont inférieures à la première information de seuil de déformation et supérieures à la deuxième information de seuil de déformation.

2. Procédé selon la revendication 1, dans lequel la détermination du fait que la boule de commande (82) est sous pression mais pas en contact avec le module de détection de pression (85) comprend en outre :
le jugement du fait que le module de détection de pression (85) a reçu un signal indiquant qu'il est pressé par la boule de commande (82) quand il est jugé que les informations de déformation sont supérieures à la première information de seuil de déformation ; et
la détermination du fait que la boule de commande (82) est sous pression mais pas en contact avec le module de détection de pression (85) quand le module de détection de pression (85) ne reçoit pas le signal indiquant qu'il est pressé par la boule de commande (82).

3. Procédé selon la revendication 2, comprenant en outre :
quand le module de détection de pression (85) a reçu un signal de pression à partir de la boule de commande (82), l'exécution d'une opération de pointer-et-cliquer sur les informations affichées en fonction du signal de pression.

4. Dispositif pour une localisation de pression basée sur une boule de commande, comprenant :
un support à pattes multiples (81), une boule de commande (82), un module de traitement (83) et un module de localisation (84), dans lequel
le support à pattes multiples (81) est configuré pour supporter la boule de commande (82) et détecter une pression sur la boule de commande (82) d'un terminal mobile, et transmettre ses propres informations de déformation sous la pression au module de traitement (83),
la boule de commande (82) est configurée pour recevoir la pression ;
le module de traitement (83) est configuré pour :
recevoir les informations de déformation à partir du support à pattes multiples (81), comparer les informations de déformation reçues avec les informations de seuil de déformation stockées à l'intérieur, déterminer un type d'une opération de pression sur la boule de commande (82)
dans lequel, quand il est déterminé que la boule de commande (82) est sous pression mais pas en contact avec un module de détection de pression (85), l'enregistrement d'une trajectoire de la boule de commande (82) par un module de localisation (84), et l'exécution d'opérations correspondantes sur des informations affichées en fonction de la trajectoire ;
**caractérisé en ce que**
chaque patte du support à pattes multiples (81) comprend un support élastique (311) et une boule de support (312), le support élastique (311) comprend deux composants élastiques (3111, 3112) connectés par l'intermédiaire d'un arbre, un capteur est disposé sur l'arbre ; dans lequel les informations de seuil de déformation comprennent une première information de seuil de déformation et une deuxième information de seuil de déformation le module de traitement (83) est configuré en outre pour :
la comparaison des informations de déformation avec la deuxième information de seuil de déformation stockée à l'intérieur quand les informations de déformation sont inférieures à la première information de seuil de déformation ; et quand les informations de déformation sont inférieures à la deuxième information de seuil de déformation, la détermination du fait que la boule de commande (82) est déroulée, l'enregistrement d'une trajectoire de la boule de commande (82) par le module de localisation (84), et l'exécution d'une opération de localisation sur les informations affichées en fonction de la trajectoire,
dans lequel la détermination du fait que la boule de commande (82) est sous pression mais pas en contact avec le module de détection de pression (85) comprend :
la comparaison des informations de déformation reçues avec la première information de seuil de déformation, qui est déterminée en fonction d'une distance entre la boule de commande (82) et le module de détection de pression (85) quand la boule de commande (82) est sous pression mais pas en contact avec le module de détection de pression (5) et les informations de déformation du support à pattes multiples (1) qui supporte la boule de commande (82) quand la boule de commande (82) est sous pression mais pas en contact avec le module de détection de pression (85) ; et
la détermination du fait que la boule de commande est sous pression mais pas en contact avec le module de détection de pression (85) quand les informations de déformation sont inférieures à la première information de seuil de déformation et supérieures à la deuxième information de seuil de déformation.

5. Dispositif selon la revendication 4, dans lequel le module de traitement (83) comprend :
une unité de stockage (831), configurée pour stocker la première information de seuil de déformation, qui est déterminée en fonction d'une distance entre la boule de commande (82) et le module de détection de pression (85) quand la boule de commande (82) est sous pression mais pas en contact avec le module de détection de pression (85) et les informations de déformation du support à pattes multiples (81) qui supporte la boule de commande (82) quand la boule de commande (82) est sous pression mais pas en contact avec le module de détection de pression (85) ; et
une unité de détermination de comparaison (832), configurée pour déterminer le fait que la boule de commande (82) est sous pression mais pas en contact avec le module de détection de pression (85) quand les informations de déformation sont inférieures à la première information de seuil de déformation.

6. Dispositif selon la revendication 5, dans lequel
le module de traitement (83) est configuré en outre pour juger le fait que le module de détection de pression (85) a reçu un signal indiquant qu'il est pressé par la boule de commande (82) quand les informations de déformation sont supérieures à la première information de seuil de déformation et déterminer le fait que la boule de commande (82) est sous pression mais pas en contact avec le module de détection de pression (85) quand il ne reçoit pas le signal indiquant qu'il est pressé par la boule de commande (82), et
le dispositif comprend en outre un module de détection de pression (85) configuré pour détecter le fait qu'une pression est reçue à partir de la boule de commande (82), générer un signal de pression quand la pression provenant de la boule de commande (82) est détectée, et transmettre le signal de pression au module de traitement (83).

7. Dispositif selon la revendication 6, dans lequel le module de traitement (83) est configuré en outre pour exécuter une opération de pointer-et-cliquer sur les informations affichées en fonction du signal de pression quand le module de détection de pression (85) reçoit un signal de pression à partir de la boule de commande (82).

8. Dispositif selon la revendication 4, dans lequel le support à pattes multiples (81) comprend un support à trois pattes (31).
